## Europäisches Patentamt

## European Patent Office

## Office européen des brevets

(11) Veröffentlichungsnummer: **0 143 167**
**B1**

(12) **EUROPÄISCHE PATENTSCHRIFT**

(45) Veröffentlichungstag der Patentschrift:
**26.10.88**

(21) Anmeldenummer: **84108480.9**

(22) Anmeldetag: **18.07.84**

(51) Int. Cl.⁴: **G 01 F 23/22** // G01F23/24, G01F23/26

(54) Einrichtung zum elektrischen Messen eines Flüssigkeitsniveaus.

(30) Priorität: **29.10.83 DE 3339325**

(43) Veröffentlichungstag der Anmeldung:
**05.06.85 Patentblatt 85/23**

(45) Bekanntmachung des Hinweises auf die Patenterteilung:
**26.10.88 Patentblatt 88/43**

(84) Benannte Vertragsstaaten:
**DE FR GB IT SE**

(56) Entgegenhaltungen:
**DE - A - 3 108 969**
**DE - A - 3 116 987**
**DE - A - 3 148 383**
**DE - B - 2 452 104**
**DE - B - 2 849 143**

(73) Patentinhaber: **VDO Adolf Schindling AG,
Gräfstrasse 103, D-6000 Frankfurt/Main (DE)**

(72) Erfinder: **Kant, Bernhard, Berliner Strasse 9,
D-6236 Eschborn/Ts. (DE)**
Erfinder: **Jakobs, Hasko, Dr., Harderstrasse 16,
D-6238 Hofheim (DE)**

(74) Vertreter: **Könekamp, Herbert, Dipl.-Ing., Sodener
Strasse 9, D-6231 Schwalbach (DE)**

**Beschreibung**

Die Erfindung bezieht sich auf eine Einrichtung zum elektrischen Messen eines Niveaus einer in einem Behälter enthaltenen Flüssigkeit mit einer in die Flüssigkeit eingetauchten, von einem Schutzrohr umschlossenen Leiterfolie, wie einer temperaturabhängigen, elektrisch fremd-beheizten Widerstandsfolie, deren von einer Auswertschaltung erfassbarer Gesamtwiderstand von dem Flüssigkeitsniveau in dem Behälter abhängig ist, oder einer zwei Leiter tragenden und somit einen Kondensator bildenden Kapazitätsfolie, wobei in beiden Fällen die Leiterfolie als flaches Band ausgebildet und durch an zumindest einer ihrer Längskanten angreifende Halteelemente an ihren beiden Oberflächen von der Flüssigkeit umspülbar, unverdrillt in dem Schutzrohr gehalten ist. Eine solche Vorrichtung ist beispielsweise in der DE-OS 2 849 143 beschrieben.

Bei Flüssigkeitsbehältern tritt oft das Problem auf, dass der Abstand des Behälteroberteils vom Behälterboden beträchtlich schwankt, weil die Fertigungstoleranzen gross sind und weil der Behälterboden sich durch das Gewicht der in ihm enthaltenen Flüssigkeiten je nach Füllstand mehr oder weniger ausbeult. Um dennoch auch im unteren Füllstandsbereich eine ausreichend hohe Messgenauigkeit zu erzielen, hat man bereits elastische Folienhalter entwickelt, welche federnd gegen den Behälterboden anliegen und dadurch den Bewegungen des Behälterbodens folgen können. Bekannt ist es auch, einen starren Folienhalter mittels einer Feder stets gegen den Behälterboden zu halten. Solche Konstruktionen sind jedoch recht aufwendig und werden aus Kostengründen selten verwirklicht.

Aus der DE-A-3 108 969 ist eine Einrichtung der eingangs genannten Art bekannt. Da das Schutzrohr unabhängig von dem Behälterboden angeordnet ist, erfolgt eine Füllstandsmessung ohne Berücksichtigung der Bewegungen des Behälterbodens.

Weiterhin ist aus der DE-B-2 452 104 ein Rohr aus elastischem Kunststoff bekannt, das einen mit umlaufenden Wellen ausgebildeten Bereich besitzt, in dem es abwinkelbar ist. Nach einer Abwicklung verbleibt das Rohr spannungsfrei in der Position, in die es verbogen wurde.

Der Erfindung liegt die Aufgabe zugrunde, eine Einrichtung zum elektrischen Messen eines Flüssigkeitsniveaus zu entwickeln, dessen die Leiterfolie tragendes Schutzrohr unabhängig von Behältertoleranzen oder Behälterformänderungen den Behälterboden zu berühren vermag, ohne dass hierzu spezielle Niederhalter oder eine komplizierte Gestaltung der Messeinrichtung erforderlich ist.

Diese Aufgabe wird erfindungsgemäss bei einer Einrichtung der eingangs genannten Art dadurch gelöst, dass das Schutzrohr aus zwei steifen Rohrabschnitten besteht, die durch ein quer zur Fläche der Leiterfolie bewegbares Gelenk aus einer zueinander fluchtenden Position in eine einen stumpfen Winkel zueinander bildenden Position biegbar sind, wobei die Rohrabschnitte in die zueinander fluchtende Position federnd vorgespannt sind.

Durch diese erfindungsgemässe Gestaltung ergibt es sich, dass das Schutzrohr nur in einer solchen Richtung gebogen werden kann, in der sich auch die Leiterfolie biegen lässt. Die Leiterfolie wird deshalb durch das Verformen des Schutzrohres nicht beschädigt, sie kann weder Falten bilden noch reissen. Weil das Gelenk die Rohrabschnitte in einer zueinander fluchtende Position vorspannt, kann das Schutzrohr so in einem Behälter eingebaut werden, dass der untere Rohrschnitt den Behälterboden berührt und beide Rohrabschnitte miteinander einen stumpfen Winkel bilden. Das hat zur Folge, dass der untere Rohrschnitt durch Verlängerung seiner Winkelstellung zum oberen Rohrabschnitt einer unterschiedlichen Lage des Behälterbodens folgen kann. Es erübrigen sich spezielle Niederhalter. Hervorzuheben ist auch, dass durch die erfindungsgemässe Gestaltung auch bei stark unterschiedlichen Lagen des Behälterbodens stets der Füllstand bis zur maximal möglichen Füllstandshöhe gemessen werden kann.

Besonders einfach gestaltet sich das Gelenk, wenn es wie im Anspruch 2 angegeben durch mehrere umlaufende Rohrwellungen gebildet ist. Durch die Rohrwellungen wird das Schutzrohr im Bereich des Gelenks 4 zum Faltenbalg. Die Biegerichtung des Faltenbalgs kann entsprechend Anspruch 3 durch den seitlichen Steg oder die beiden seitlichen Stege vorgegeben werden.

Eine andere Möglichkeit zur Vorbestimmung der Biegerichtung des Faltenbalgs besteht darin, dass der Querschnitt des Schutzrohres im Bereich des Gelenks quer zur Gelenkachse eine biegesteife Form aufweist, wobei dies durch einen ovalen oder einen rechteckigen Querschnitt erreichbar ist.

Eine weitere vorteilhafte Ausgestaltung der Erfindung besteht darin, dass die Rohrabschnitte innenseitig und zueinander gegenüberliegend als Halteelemente für die Leiterfolie zwei Führungsfugen haben, im Bereich des Gelenkes die Leiterfolie jedoch ungeführt verläuft. Da das Schutzrohr im Bereich des Gelenkes nur so gebogen werden kann, dass die Biegelinie durch die Ebene der Leiterfolie verläuft, bleibt die Leiterfolie auch im Bereich des Gelenkes stets in der Mitte des Schutzrohres, so dass eine Führung oder Distanzierung der Leiterfolie im Gelenkbereich unnötig wird. Im übrigen Schutzrohr kann die Leiterfolie in an sich bekannter Weise – wie im Anspruch 3 angegeben – durch Führungsfugen geführt werden.

Besonders einfach herstellbar ist die erfindungsgemässe Einrichtung, wenn das Schutzrohr ein nachverformtes Extrusionsteil aus einem halbstarren Kunststoff ist. Die erforderliche Elastizität des Gelenkes entsteht dann zwangsläufig durch die Wellungen, so dass zusätzliche federnde Mittel unnötig sind.

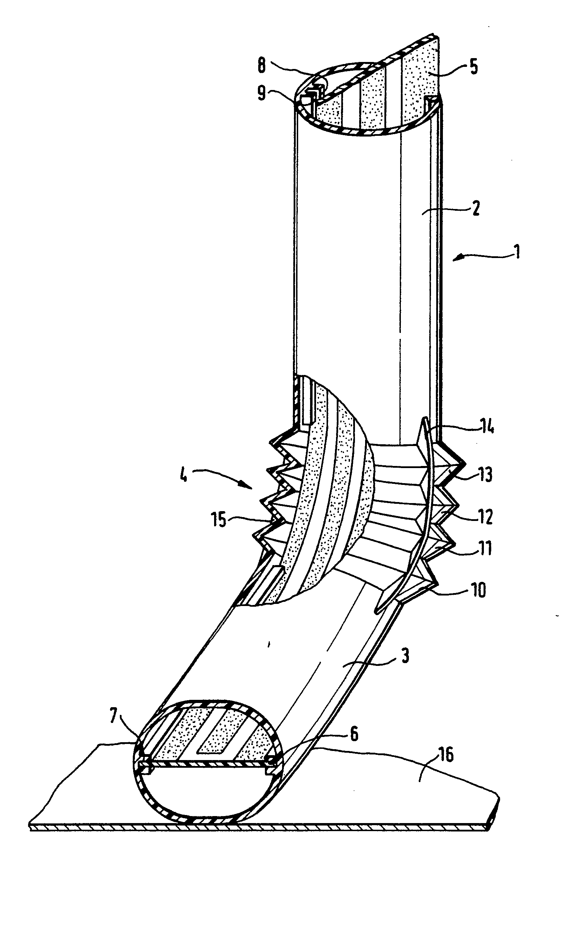

Die Erfindung lässt verschiedene Ausführungsformen zu. Zur Verdeutlichung ihres Grundprinzipes ist eine davon in der Zeichnung dargestellt und wird nachfolgend beschrieben. Diese zeigt den für die Erfindung wesentlichen Teil der Einrichtung abgestützt auf einen Behälterboden in räumlicher Darstellung.

Die Zeichnung zeigt ein Schutzrohr 1, welches aus zwei steifen Rohrabschnitten 2, 3 besteht, die durch ein Gelenk 4 miteinander verbunden sind. Im Inneren des Schutzrohres 1 ist eine Leiterfolie 5 angeordnet, die in gegenüberliegenden Führungsfugen 6, 7 seitlich geführt ist. Die Führungsfugen 6, 7 sind dadurch gebildet, dass jeweils nebeneinander zwei Stege 8, 9 in das Innere des Schutzrohres 1 ragen.

Für die Erfindung wesentlich ist die Anordnung und Ausbildung des Gelenkes 4. Bei der dargestellten Ausführungsform der Erfindung ist das Gelenk 4 durch mehrere umlaufende Rohrwellungen 10, 11, 12, 13 gebildet. Um eine definierte Biegerichtung festzulegen, ist an jeder Seite des Schutzrohres 1 im Bereich des Gelenkes 4 aussenseitig ein Verstärkungssteg 14, 15 vorgesehen. Diese Verstärkungsstege 14, 15 sind einander gegenüberliegend so angeordnet, dass bei Verformung des Gelenkes 4 die Biegelinie durch die Ebene der Leiterfolie 5 verläuft. Deshalb kann die Leiterfolie 5 beim Biegen des Schutzrohres 1 nicht gestaucht werden oder reissen. Weiterhin wird aus diesem Grunde ein Führen der Leiterfolie 5 durch die Führungsfugen 6 und 7 im Bereich des Gelenkes 4 unnötig.

Bei dem Schutzrohr 1 handelt es sich vorzugsweise um ein Extrusionsteil aus halbstarrem Kunststoff, welches im Bereich des Gelenkes 4 nachverformt ist und durch die Rohrwellungen 10 bis 13 im Bereich des Gelenkes 4 elastisch verformbar ist.

Die Zeichnung lässt weiterhin erkennen, dass die Rohrabschnitte 2, 3 zueinander in einem stumpfen Winkel stehen und der untere Rohrabschnitt 3 mit seinem untersten Ende auf einem Behälterboden 16 aufliegt. Durch diese Anordnung und Gestaltung ergibt sich folgende Funktionsweise. Bewegt sich der Behälterboden 16 beispielsweise durch das Gewicht der in dem Behälter enthaltenen Flüssigkeit nach unten, so vermag der untere Rohrabschnitt 3 dieser Bewegung zu folgen, indem sich der Winkel zwischen dem oberen Rohrabschnitt 2 und dem unteren Rohrabschnitt 3 vergrössert. Bewegt sich der Behälterboden 16 nach oben, so verkleinert sich der Winkel zwischen den beiden Rohrabschnitten 2 und 3.

Es versteht sich, dass z.B. der untere Rohrabschnitt 3 eine geringe Länge aufweist, so dass die Rohrwellungen 10 bis 13 fast bis zum Behälterboden 16 reichen. Die erfindungsgemässe Einrichtung hat den Vorteil, dass sie selbst in Tanks komplizierter verwinkelter Form einfach angeordnet werden kann, wobei die eindeutig vorgegebene Biegerichtung die eindeutig richtige Einbaulage gewährleistet.

Dadurch, dass die Rohrabschnitte jeweils eine Teilkammer des aus mehreren Teilkammern zusammengesetzten Tanks diagonal durchragend angeordnet werden kann, ist eine Kennlinienanpassung der Messkennlinie an die Tankform auf einfache Weise möglich.

## Patentansprüche

1. Einrichtung zum elektrischen Messen der Niveaus einer in einem Behälter enthaltenen Flüssigkeit mit einer in die Flüssigkeit eingetauchten, von einem Schutzrohr umschlossenen Leiterfolie, wie einer temperaturabhängigen elektrisch fremdbeheizten Widerstandsfolie, deren von einer Auswertschaltung erfassbarer Gesamtwiderstand von dem Flüssigkeitsniveau in dem Behälter abhängig ist oder einer zwei Leiter tragenden und somit einen Kondensator bildenden Kapazitätsfolie, wobei in beiden Fällen die Leiterfolie als flaches Band ausgebildet und durch an zumindest einer ihrer Längskanten angreifende Halteelemente an ihren beiden Oberflächen von der Flüssigkeit umspülbar unverdrillt in dem Schutzrohr gehalten ist, dadurch gekennzeichnet, dass das Schutzrohr (1) aus zwei steifen Rohrabschnitten (2, 3) besteht, die durch ein quer zur Fläche der Leiterfolie (5) bewegbares Gelenk (4) aus einer zueinander fluchtenden Position in eine einen stumpfen Winkel zueinander bildenden Position biegbar sind, wobei die Rohrabschnitte (2, 3) in die zueinander fluchtende Position federnd vorgespannt sind.

2. Einrichtung nach Anspruch 1, dadurch gekennzeichnet, dass das Gelenk (4) durch mehrere umlaufende Rohrwellungen (10–13) gebildet ist.

3. Einrichtung nach Anspruch 2, dadurch gekennzeichnet, dass das Gelenk (4) seitlich der Leiterfolie (5) an zumindest einer Seite aussenseitig einen Verstärkungssteg (14) hat, der entlang der Biegelinie des Gelenks (4) verläuft.

4. Einrichtung nach Anspruch 2, dadurch gekennzeichnet, dass der Querschnitt des Schutzrohres (1) im Bereich des Gelenks (4) quer zur Gelenkachse eine biegesteife Form aufweist.

5. Einrichtung nach Anspruch 4, dadurch gekennzeichnet, dass der Querschnitt des Schutzrohres oval ausgebildet ist.

6. Einrichtung nach Anspruch 4, dadurch gekennzeichnet, dass der Querschnitt des Schutzrohres rechteckig ausgebildet ist.

7. Einrichtung nach Anspruch 1 oder einem der folgenden, dadurch gekennzeichnet, dass die Rohrabschnitte (2, 3) innenseitig und zueinander gegenüberliegend als Halteelemente für die Leiterfolie (5) zwei Führungsfugen (6, 7) haben, im Bereich des Gelenks (4) die Leiterfolie (5) jedoch ungeführt verläuft.

8. Einrichtung nach Anspruch 1 oder einem der folgenden, dadurch gekennzeichnet, dass das Schutzrohr (1) ein nachverformtes Extrusionsteil aus einem halbstarren Kunststoff ist.

## Claims

1. Device for electrically measuring the levels of a liquid contained in a tank, wherein a conductive foil such as a temperature-independent, electrically externally-heated resistance foil is immersed in the liquid and surrounded by a tubular guard, and the combined resistance of said foil, which depends on the level of the liquid in the tank, can be detected by an evaluation circuit, or else wherein a capacitance foil carries two conductors and thus forms a capacitor, said conductive foil in both cases being in the form of a flat strip held untwisted in the tubular guard by holding members gripping not less than one of its longitudinal edges in such a way that the liquid can flow around both its surfaces, characterised in that the tubular guard (1) comprises two rigid tube sections (2, 3) which are adapted to be bent by means of an articulation (4) that can be moved at right angles to the surface of the conductive foil (5) from a position in which said tube sections are flush into a position in which they form an obtuse angle to one another, the tube sections (2, 3) being elastically biased towards the position in which they are flush.

2. Device according to Claim 1, characterised in that the articulation (4) is formed by a plurality of peripheral tubular corrugations (10–13).

3. Device according to Claim 2, characterised in that to the side of the conductive foil (5) the articulation (4) has a reinforcing fin (14) externally on at least one side which runs along the elastic line of the articulation (4).

4. Device according to Claim 2, characterised in that the cross-section of the tubular guard (1) has a rigid shape in the region of the articulation (4) at right angles to the articulation axis.

5. Device according to Claim 4, characterised in that the tubular guard has an oval cross-section.

6. Device according to Claim 4, characterised in that the tubular guard has a rectangular cross-section.

7. Device according to Claim 1 or one of those following, characterised in that on their inside surface and facing one another the tube sections (2, 3) have two guide seams (6, 7) as holding members for the conductive foil (5), but in the region of the articulation (4) the conductive foil (5) does not run in guides.

8. Device according to Claim 1 or one of those following, characterised in that the tubular guard (1) is a post-formed extruded part made from a semi-rigid plastic.

**Revendications**

1. Dispositif pour la mesure électrique des niveaux d'un liquide contenu dans un réservoir, grâce à une feuille conductrice plongée dans le liquide, entourée par un tube protecteur, telle qu'une feuille formant résistance dépendant de la température, chauffée électriquement de façon indépendante et dont la résistance globale, qui peut être saisie par un circuit d'évaluation, est fonction du niveau du liquide dans le réservoir, ou grâce à une feuille capacitive servant de support à deux conducteurs et formant ainsi un condensateur, la feuille conductrice ayant dans les deux cas la forme d'un ruban plat et étant maintenue dans le tube protecteur, grâce à des éléments de support qui la saisissent au moins sur l'un de ses bords longitudinaux de façon que la feuille soit entourée par le liquide sur chacune de ses deux surfaces et qu'elle ne vrille pas, dispositif caractérisé en ce que le tube protecteur (1) est constitué par deux tronçons (2, 3) de tube rigides, qui peuvent, grâce à une articulation (4), se déplacer transversalement par rapport à la surface de la feuille conductrice (5) à partir d'une position où elles sont mutuellement alignées, à une position où elles forment un angle obtus entre elles, les tronçons (2, 3) de tube étant en situation de tension élastique préalable avec effet de ressort quand des tronçons sont en position d'alignement mutuel.

2. Dispositif selon la revendication 1, caractérisé en ce que l'articulation (4) est formée par plusieurs ondulations (10 à 13) circulaires du tube.

3. Dispositif selon la revendication 2, caractérisé en ce que l'articulation (4) comporte latéralement, par rapport à la feuille conductrice (5), au moins d'un côté à l'extérieur, une nervure (14) de renforcement qui s'étend le long de la ligne de flexion de l'articulation (4).

4. Dispositif selon la revendication 2, caractérisé en ce que la section transversale du tube protecteur (1) présente dans la zone de l'articulation (4) et transversalement par rapport à l'axe de l'articulation, une forme résistant bien à la flexion.

5. Dispositif selon la revendication 4, caractérisé en ce que la section transversale du tube protecteur a une forme ovale.

6. Dispositif selon la revendication 4, caractérisé en ce que la section transversale du tube protecteur a une forme rectangulaire.

7. Dispositif selon la revendication 1 ou l'une des revendications suivantes, caractérisé en ce que les tronçons (2, 3) de tube comportent à l'intérieur et à l'opposé l'une de l'autre, deux rainures (6, 7) de guidage qui servent d'éléments de maintien pour la feuille conductrice (5), mais que, cependant, la feuille conductrice (5) s'étend sans être guidée dans la zone de l'articulation (4).

8. Dispositif selon la revendication 1 ou l'une des revendications suivantes, caractérisé en ce que le tube protecteur (1) est une pièce en matière plastique semi-rigide extrudée puis façonnée.